# EUROPÄISCHE PATENTSCHRIFT

(11) **EP 0 540 773 B1**
(45) Veröffentlichungstag und Bekanntmachung des Hinweises auf die Patenterteilung: **21.09.1994**
(21) Anmeldenummer: 91118870.4
(22) Anmeldetag: 06.11.1991
(51) Int. Cl.: B63B 49/00, G01P 13/02

(54) **Windanzeiger für Segelboote**
Wind indicator for sailing boats
Indicateur du vent pour bateaux à voile

(43) Veröffentlichungstag der Anmeldung: 12.05.1993
(73) Patentinhaber: Hunger, Gerd, Dr.med., D-81927 München (DE)
(72) Erfinder: Hunger, Gerd, Dr.med., D-81927 München (DE)

(56) Entgegenhaltungen:
- DE-A- 1 803 464
- DE-A- 2 206 886
- GB-A- 2 181 848
- US-A- 2 040 305
- US-A- 3 815 412
- US-A- 3 971 251

## Beschreibung

Die Erfindung bezieht sich auf einen einfachen Windmesser, der vielseitiger als die Windfahne (Verklicker) und betriebssicherer als es das Wantenbändsel ist.

Die ständige Kenntnis der jeweiligen Windrichtung und Windgeschwindigkeit ist die Basis für optimales Manövrieren beim Segeln, - ganz besonders wenn ein nur schwacher Wind aus wechselnden Richtungen weht. Grössere Segelboote besitzen deshalb Spezialgeräte, an denen man die (scheinbare) Windrichtung und die Windgeschwindigkeit stets bequem ablesen kann. Bei der Ausstattung einfacher Jollen spart man sich diese technisch z.T. aufwendigen Geräte und beschränkt sich auf eine Windfahne (Verklicker) an der Mastspitze. Sie läßt zwar keinerlei Rückschlüsse auf die Windgeschwindigkeit zu, zeigt aber wenigstens die Windrichtung an - allerdings zeigt sie bei eingetretener Windstille noch in die alte Windrichtung und läßt auch ein erneutes Aufleben des Windes aus der alten Richtung nicht erkennen. Außerdem ist die Windfahne sehr unbequem abzulesen: man muß den Kopf weit in den Nacken beugen und dabei oft noch in die Sonne blinzeln.

Viele Jollensegler beseitigen diese Mängel in Selbsthilfe und bringen zusätzlich zur Windfahne Wantenbändsel an, Fäden (Wolle, Garn, Bändchen), die etwa in Augenhöhe, also ständig sehr bequem ablesbar, an beiden Wanten festgeknotet werden. Sie informieren über Windrichtung und Windgeschwindigkeit. So lassen sie nach einer Windstille an ihrer Schrägstellung sofort erkennen, wenn der Wind wieder auflebt, zeigen dann seine Richtung exakt an und orientieren über seine Geschwindigkeit.

Wantenbändsel warnen auch vor unerwarteten Böen und tragen damit zur Sicherheit auf kleinen Segelbooten bei.
Wantenbändsel haben einen gravierenden Nachteil:
Wie die Praxis zeigt, neigen sie dazu, sich bei wechselnden Fahrt - oder Windrichtungen um die Wanten zu wickeln, was einen Funktionsausfall bedeutet. Sie müssen dann während des Segelns von Hand wieder freigewickelt werden, was generell unbequem, vor allem aber für Einhandsegler lästig ist.

### Stand der Technik

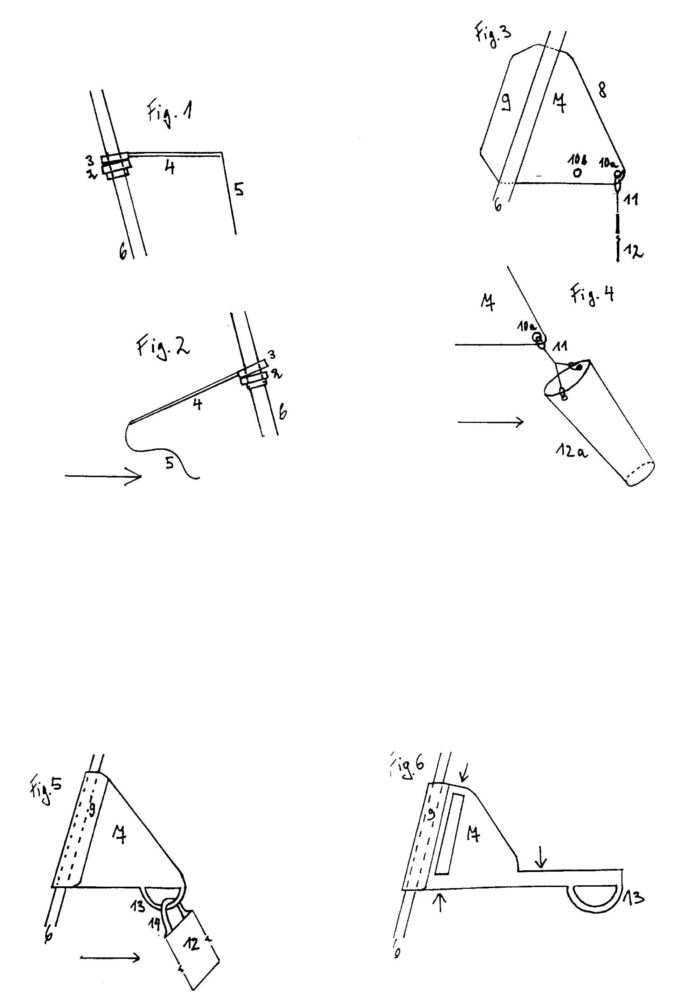

Diesen Nachteil beseitigt das kommerzielle Newport Tell Tale (Wz), hier Drehscheibenanzeiger (DSA) genannt, basierend auf United States Patent 3,815,412. DSA besitzt dafür andere gravierende Nachteile. Beim DSA (Fig. 1) wird an den Wanten (6) eine Scheibe (2) befestigt, die als Lager für eine Drehscheibe (3) dient, mit welcher der sich um die Wante drehende Anzeiger fest verbunden ist. Der Anzeiger selbst besteht aus einem starren Teil (4), der vorwiegend die Funktion eines beweglichen

Abstandshalters hat, und einem flexiblen, in Ruhe senkrecht herabhängenden Teil (5). Dieser darf beim DSA nicht wesentlich länger sein als der starre Teil (4) - sonst würde sich der flexible Teil (5) wie ein gewöhnliches Wantenbändsel doch wieder um die Wante (6) wickeln können.
Der Endpunkt des starren Teils (4) wird wegen der schrägen Wante (6) zwangsläufig auf einer schrägen Kreisbahn (normal zur schrägen Wante) geführt. Drehbewegungen des Anzeigers vom tiefsten Punkt innen nach (oben) aussen sind erschwert, weil sie gegen die Schwerkraft erfolgen, so daß schon theoretisch die Windrichtung nicht immer korrekt angezeigt werden kann. Vorallem aber wird die Drehscheibe des DSA (3) durch den langen Hebel des starren Teils (4) des Anzeigers verkantet - umsomehr als an diesem langen Hebelarm auch der flexible Teil (5) hängt.

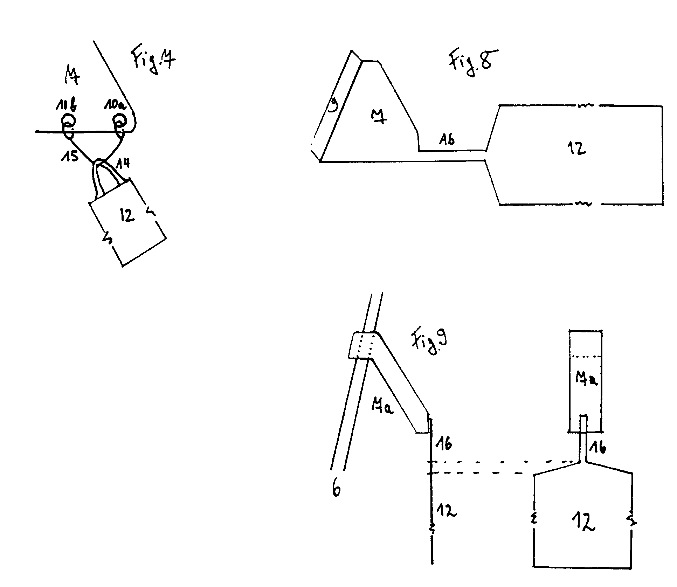

Der DSA muß deshalb in einem gewissen Ausmaß an der rauhen Wante (6) klemmen. Bei aufkommendem schwachen Wind nach Windstille oder bei einem Wechsel der Fahrt - oder Windrichtung bei schwachem Wind reagiert der starre Teil (4) tatsächlich zunächst nicht, wie die praktische Erfahrung zeigt. Diese Reaktionsträgheit beruht wesentlich darauf, daß die einzig mögliche Bewegungsebene für den starren Teil (4) zwar schräg ist, aber der Waagerechten doch weit näher als der Senkrechten kommt. Auf die vorherrschenden waagerechten Winde kann der starre Teil des DSA-Anzeigers generell nicht empfindlich reagieren, weil er dem Wind nur eine geringe Angriffsfläche bietet. - Im Gegensatz zu dem in Ruhe insgesamt senkrecht hängenden, beliebig langen Anzeiger des hier vorgestellten Windrichtungsanzeigers (Weran). In speziellen Positionen ist die Empfindlichkeit des DSA-Anzeigers besonders gering. Kommt schwacher Wind z.B., beim Kreuzen senkrecht von der Längsseite des DSA, so ist die Angriffsfläche für den Wind minimal und der DSA zeigt zunächst die falsche Windrichtung an. Bei zunehmendem Wind springt der DSA dann plötzlich in die richtige Position - nachdem er zuvor die Windrichtung um 30° oder auch 45° falsch angezeigt hatte. Manchmal zeigen auch der starre Teil (4) und der flexible Teil (5) in gegensätzliche Richtungen (Fig. 2,die Windrichtung ist durch einen Pfeil markiert). Man könnte deshalb versuchen, sich bei schwachem Wind allein nach dem flexiblen Teil (5) des Anzeigers zu richten. Aber auch dieser kann die Windrichtung verfälscht anzeigen:
Hält man nämlich in einem windstillen Raum den DSA so, daß sich der starre Teil (4) in seiner Längsrichtung in waagerechter, in seiner Querrichtung in senkrechter Position befindet, so zeigt der flexible Teil (5) (wegen eines fehlenden Gelenks und wegen seiner geringen aber doch vorhandenen Eigenelastizität) nicht nach unten (= kein Wind) sondern er zeigt tätsächlich Wind aus einer bestimmten Richtung an.

Dreht man jetzt den versteiften Teil (4) in seiner Längsachse um 180°, so zeigt der flexible Teil (5) Wind aus einer ganz anderen Richtung an, nämlich spiegelbildlich zur Ebene des starren Teils (4). Wenn schwache seitliche Winde auf den flexiblen Teil (5) einwirken, ehe sich der starre Teil (4) in den Wind gedreht hat, muß es durch die Eigenelastizität zu gewissen Richtungsverfälschungen kommen - umso ausgesprochener je kürzer der flexible Teil (5) und je schwächer der Wind ist. Es fehlt am Übergang vom starren zum flexiblen Teil (4/5) eine gelenkartige Verbindung die eine spannungsfreie (limitierte) Drehung um die eigene Längsachse erlaubt.

### Gegenstand der Erfindung

Ein Windrichtungsanzeiger gemäß Anspruch 1.

### Realisationsmöglichkeiten

### 1. Möglichkeit

An der Öffnung (10a) des Abstandshalters (7) in Fig. 3 wird ein Faden (11) (z.B. Zwirn, Wolle, Garn, Kordel) als "gelenkartige Verbindung" befestigt. Der Faden bleibt in seinem oberen Teil (11) unbehandelt und erfüllt damit die Ansprüche einer gelenkartigen Verbindung (11). Im unteren, längeren Teil (12) wird der Faden soweit versteift, etwa mit Appretur oder (Haar)-Lack, oder durch Einziehen eines Kunststoff- oder Metalldrahtes, daß er sich nicht um die Wante (6) wickeln kann. Der versteifte Teil des Fadens (12) stellt einen brauchbaren Anzeiger dar (12). An seiner Stelle können auch andere Anzeiger wie zur Längsachse rotationssymmetrische, also etwa zylindrische oder als Kegelstumpf geformte oder zeppelinartige Schaumstoff- oder Hohlkörper oder auch ein ausreichend versteifter Windsack (12a in Fig. 4, der Pfeil zeigt die Windrichtung an), letzterer z.B. auch aus Tiefziehfolie an dem beweglichen Fadenteil bzw. der gelenkartigen Verbindung (11) befestigt werden. Schließlich können auch nicht rotationssymmetrische Flugkörper bei dieser Konstruktion verwendet werden, wenn sie gut im Wind liegen.

### 2. Möglichkeit

Flächige Anzeiger, etwa Streifen und Bänder aus beliebigem ausreichend steifen oder elastischem auch unterschiedlichem Material (Stoff, Vlies, Folie, Papiere, Federn usw.), eventuell auch durch Prägungen oder Auftragungen versteift, sind für die unter 1 beschriebene Aufhängung an einem Faden als gelenkartige Verbindung weniger geeignet. Sie neigen bei stärkerem Wind dazu, sich wirbelnd um die eigene Achse zu drehen, was stört. Dies läßt sich ausschalten durch ein spezielles Kugelgelenk, das die Drehung solcher flächiger Anzeiger um die eigene Längsachse auf etwa 180° einschränkt. Der Anzeiger (12) liegt dann ruhiger in der Luft, was durch eine Auffiederung an seinem Ende noch gefördert werden kann. Durch einen Folienhalbring (13) am Abstandshalter (7) in den der Anzeiger (12) mit einem flachen Ring (14) eingehängt ist, wird eine gelenkartige Verbindung geschaffen mit der sich das Gleiche wie mit einem eigentlichen Gelenk erreichen läßt. (Fig. 5)

Um den mehr theoretischen Einwand zu entkräften, der Anzeiger könnte dabei nicht mehr ganz korrekt anzeigen, wenn das Boot exakt vor dem Wind läuft, kann der Abstandshalter (7) 3 Sollbiegestellen erhalten (Fig. 6, Pfeile). Bei Rückenwind wir der Abstandshalter (7) dann vor allem an diesen Stellen etwas nach vorn gebogen. Der Anzeiger (12) kann dann ungehindert nach vorn zeigen und dabei auch noch flach im Wind liegen.

Das gleiche kann mit einer Konstruktion nach Fig. 7 erreicht werden. Der Halbring (13) wird dabei durch einen Textilfaden z.B. Perlon (15) ersetzt. Weitere Variationen der gelenkartigen Verbindung für flächige Anzeiger sind möglich - etwa Einschalten einer leichten Kunststoffkette zwischen Abstandhalter (7) und Anzeiger (12). Wesentlich ist dabei, daß die Drehbewegungen des flächigen Anzeigers um seine Längsachse einerseits ermöglicht und andererseits limitiert werden.

### 3. Möglichkeit

Die Biegsamkeit und Verwindungsfähigkeit eines schmalen Folien "halses" kann als gelenkartige Verbindung genutzt werden. Bei einer Folie in Form von Fig. 8 wird der Anzeiger am Hals (16) um 90° gedreht und z.B. durch Wärmebehandlung in dieser Stellung fixiert. Nach Montage hängt der Anzeiger dann dank der Biegsamkeit des schmalen Halses (16) senkrecht nach unten und parallel zur Symmetrieebene des Bootes. Das Manko des DSA, daß Drehungen um die Längsachse des Anzeiger im starren Teil (4) nicht, und im flexiblen Teil (5) nur erschwert möglich sind, ist hier durch den schmalen Hals (16) und den breiten Anzeiger (12) weitgehend beseitigt (günstiges Verhältnis der Drehmomente bei geringer Verwindungssteife des Halses). Materialeigenschaften und Dicke der Folie sowie Länge und Breite des Halses müssen dazu aufeinander abgestimmt werden.

### 4. Möglichkeit

Der Abstandshalter kann aber auch massiv ausgeführt sein (Fig. 9, 7a). An seinem freien Ende wird ein Anzeiger (12) mit Folienhals (16) befestigt. Weitere Realisationsmöglichkeiten sind gegeben, so kann der Hals durch eine natürliche Borste einen fadenförmigen Kunststoffzylinder oder eine Spirale ersetzt werden, auch können jeweils verschiedenartige Anzeiger verwendet werden.

### 5. Möglichkeit

Anstelle des Halses (16) kann auch ein in der Symmetrieebene des Bootes liegender Ring oder Halbring z.B. an einem massiven Abstandshalter (7a) befestigt werden und über einen flachen Zwischenring mit dem ebenfalls flachen Ring oder Halbring eines vorzugsweise flächigen Anzeigers (12) verbunden werden. In Ruhe hängt der Anzeiger parallel zur Symmetrieebene des Bootes, sein Drehbereich um die eigene Achse erreicht fast 360°. (keine Fig).
Weitere Möglichkeiten der Realisation des Grundgedankens sind gegeben.

### Vorteile des Weran gegenüber dem DSA.

1) Der Weran braucht nur einen kurzen und deshalb wenig störenden Abstandshalter (7). Er kann so kurz sein wie die gelenkartige Verbindung (11). Der Anzeiger (12) ist in seiner Länge vom Abstandshalter (7) völlig unabhängig. Er braucht auch nicht in sich verwindungsfähig zu sein (Ausnahme Fig. 5)
   Beim DSA muß der starre Teil (4) dagegen relativ lang sein. Dieser weitgehend waagerecht gelagerte und deshalb mehr als beweglicher Abstandshalter denn als Anzeiger der ebenfalls waagerechten Winde fungierende starre Teil (4) muß prinzipiell so lang sein, wie der senkrecht hängende flexible Teil (5). Dieser braucht andererseits "Länge" damit er ausreichend empfindlich und ausreichend verwindungsfähig ist.
2) Die gelenkartige Verbindung des Weran ist einfach konstruiert und leicht gängig. Sie sichert dem Anzeiger um einen Drehpunkt freie Winkelbeweglichkeit in allen bedeutsamen Richtungen und erlaubt zusätzlich ausreichende Drehbewegungen um die eigene Längsachse des Anzeigers. Keine Falschanzeigen.
   Beim DSA klemmt das Drehscheibengelenk konstruktionsbedingt. Es führt den Anzeiger zwangsläufig auf einer schiefen Ebene. Die Schwergängigkeit führt zu Fehlern und Sprüngen in der Richtungsanzeige, die durch die Kräfte der schiefen Ebene noch vergröbert werden können.
3) Beim montierten Weran hängt der gesamte Anzeiger in beliebiger Länge senkrecht und bietet den waagerechten Winden eine optimale Angriffsfläche. Der Anzeiger stellt sich bei Windstille spontan parallel zur Symmetrieebene des Bootes ein. Vor allem ist auch die Drehung um seine eigene Längsachse leicht gängig und soweit möglich, daß er stets flach im Wind schwimmen kann.
   Beim montierten DSA liegt der starre Teil (4) des Anzeigers weitgehend waagerecht und bietet den waagerechten Winden wenig Angriffsfläche. Der flexible Teil (5) darf nicht nennenswert länger sein als der starre Teil (4). Der flexible Teil (5) hängt zwar senkrecht, kann sich aber nicht spontan zur Symmetrieebene des Bootes einstellen.
   Bei einem Nachhinken des starren Teils (4) entsteht des öfteren ein Winkel zwischen beiden Teilen. Die dann erwünschte Verwindung des breiten Plastikbandes des flexiblen Teils (5) um sich flach und nicht verkantet in den Wind zu legen, macht umso größere Schwierigkeiten, je kürzer der flexible Teil (5) ist und je größer damit die Eigenspannungen sind, die sich auf die Richtungsanzeige auswirken.
4) die frühzeitige korrekte Anzeige der Richtung einfallender Böen durch den Weran, noch ehe die Haut des Seglers, die Segel selbst, oder der DSA reagieren, trägt zur Sicherheit des Seglers bei.

Vorteile des Weran gegenüber dem Wantenbändsel:
1) Stets funktionssicher - Funktionsausfall durch Aufwickeln auf die Wanten ausgeschlossen
2) Bessere Empfindlichkeit mit geeigneten Anzeigern.

## Patentansprüche

1. Windrichtungsanzeiger für Segelboote, der aus einer Kombination von drei Konstruktionselementen besteht:
a) aus einem an einem Ende unbeweglich an einer Wante zu befestigenden Abstandhalter (7, 7a), der massiv (7a) oder in selbsttragender Folie ausgeführt ist,
b) aus einem beliebig langen, im Verhältnis zur Angriffsfläche möglichst leichten Anzeiger (12), der aber mindestens solche Elastizität oder Steife besitzt, daß der Wind ihn nicht um die Wante wickeln kann, und
c) aus einer aus einem einzigen Gelenk bestehenden gelenkartigen Verbindung zwischen dem Abstandhalter und dem Anzeiger, die dem Anzeiger freie Winkelbeweglichkeit um einen Drehpunkt erlaubt und dabei kürzer ist als die Entfernung von dem an der Wante befestigtem Ende des Abstandhalters zu dem Ansatzpunkt der gelenkartigen Verbindung am Abstandhalter.

2. Eine Vorrichtung nach Patentanspruch 1, wobei die gelenkartige Verbindung (11) zwischen Abstandhalter (7) und Anzeiger (12) aus einem unbehandelten Faden (11), z.B. Zwirn, Garn, Kordel, Strick, Wolle besteht und der Anzeiger (12) vorzugsweise ein rotationssymmetrischer Körper mit niedrigem spezifischen Gewicht ist.

3. Vorrichtung nach Patentanspruch 1, wobei die gelenkartige Verbindung (11) in einem flachen Ring oder Halbring (13) am Abstandhalter (7) besteht, in den vorzugsweise flächige Anzeiger (12) eventuell mit "aufgefiederten" Enden mit einem ebenfalls flachen Ring oder Halbring eingehängt sind.

4. Vorrichtung nach Anspruch 3, mit einem durch Sollbiegestellen modifizierten Abstandhalter aus Folie, der vom Wind gebogen werden kann und so auch Winkelausschläge des Anzeigers (12) um seine eigene Achse über 180° ermöglicht.

5. Vorrichtung nach Anspruch 3 wobei der Halbring (13) am Abstandhalter (7) in Form eines Textilfadens (15) realisiert ist, der dem Anzeiger ebenfalls Winkelanschläge über 180° erlaubt.

6. Vorrichtung nach Patentanspruch 1, wobei als gelenkartige Verbindung ein schmaler Hals (16) aus Folie oder aus einem dünnen Kunststoffzylinder, aus einer natürlichen Borste oder einer Spirale dienen, die einen beliebigen Abstandhalter (7, 7a) mit einem beliebigen Anzeiger (12) verbinden.

7. Vorrichtung nach Patentanspruch 1, wobei die gelenkartige Verbindung folgende Konstruktionsmerkmale aufweist:
Einen flachen Ring oder Halbring, der z.B. an einem massiven Abstandhalter befestigt ist und über einen flachen Zwischenring mit einem ebenfalls flachen Ring oder Halbring eines vorzugsweise flächigen Anzeigers verbunden ist.

## Claims

1. Wind indicator for sailing boats that combines 3 construction elements
a) a spacer (7, 7a), massiv (7a) or of selfsustained film, one end of which is fixed immovably at a shroud
b) an indicator (12) of optional length which is as light as possible in relation to its area, but possesses at least such an elasticity or stiffness that the wind can't twist it around the shroud and
c) a jointlike connection between spacer and indicator consisting in a single joint which allows free angle movement around the suspension point whereby this jointlike connection is shorter than the distance between the end of the spacer fixed at the shroud and the suspension point of the jointlike connection at the spacer.

2. A device according to claim 1, whereby the jointlike connection (11) between spacer (7) and indicator (12) consists in an untreated thread (11) e.g. a piece of cotton, yarn, cord, string and the indicator preferably is a rotation symmetrical body with a low specific weight.

3. A device according to claim 1, whereby the jointlike connection (11) consists in a flat ring or semiring (3) in the spacer (7) in which preferably flat indicators (12) possibly with "feathered" ends are suspended with another flat ring or semiring.

4. A device according to claim 3 with a spacer of film, modified by planned bending spots which can be bent by the wind what allows angle movements of the indicator (12) around its axis of more than 180°.

5. A device according to claim 3 whereby the semiring (13) at the spacer (7) is realized in form of a textile thread (15) what also allows the indicator angle movements over 180 °.

6. A device according to claim 1 whereby a narrow strip of film (16) or a thin plastic cylinder or a natural bristle or a spiral serve as jointlike connection, which connect an optional spacer (7, 7a) with an optional indicator (12).

7. A device according to claim 1 whereby the jointlike connection shows the following construction characteristics: A flat ring or semiring which are fixed e.g. at a massiv spacer and are connected by a flat intermediate ring with the likewise flat ring or semiring of a preferably flat indicator.

## Revendications

1. Indicateur de vent pour bateau à voile, composé de la combinaison de trois éléments de construction :
a) d'un écarteur (7, 7a) massif (7) ou en feuille autoportante dont une extrémité doit être fixée de manière immobile à un hauban,
b) d'un indicateur (12) d'une longueur quelconque et aussi léger que possible par rapport à sa surface de prise, mais possédant au moins une élasticité ou une rigidité suffisante pour que le vent ne le fasse pas s'enrouler autour du hauban et
c) d'un raccord articulé composé d'une seule articulation entre l'écarteur et l'indicateur, articulation permettant autour d'un point de rotation, une totale liberté de mobilité angulaire et étant plus courte que la distance comprise entre l'extrémité de l'écarteur fixée au hauban et le point de fixation à l'écarteur du raccord articulé.

2. Dispositif d'après la revendication 1, le raccord articulé (11) entre l'écarteur (7) et l'indicateur (12) consistant en un fil non traité (11), p.ex. un fil fort, une ficelle, un cordon, une corde, de la laine, l'indicateur (12) étant de préférence un corps à rotation symétrique ayant un poids spécifique bas.

3. Dispositif d'après la revendication 1, le raccord articulé (11) consistant en un anneau ou un demi-anneau (13) fixé à l'écarteur (7) et auquel sont suspendus, également à l'aide d'un anneau ou d'un demi-anneau plat, des indicateurs (12) de préférence plans à l'extrémité éventuellement "en évantail".

4. Dispositif d'après la revendication 3, avec un écarteur modifié en feuille présentant des endroits pouvant se plier, écarteur pouvant être plié par le vent et permettant ainsi également à l'indicateur (12) un déplacement de plus de 180° autour de son propre axe.

5. Dispositif d'après la revendication 3, le demi-anneau (13) de l'écarteur (7) étant réalisé avec un fil textile (15) permettant également à l'indicateur un déplacement de plus de 180°.

6. Dispositif d'après la revendication 1, un mince cou (16) en feuille, ou fait d'un mince cylindre en plastique, ou d'un crin naturel, ou d'une spirale, est utilisé comme raccord articulé, cou reliant un écarteur quelconque (7, 7a) à un indicateur quelconque (12).

7. Dispositif d'après la revendication 1, le raccord articulé présentant les caractéristiques de construction suivantes :
un anneau ou un demi-anneau plat, fixé p.ex. à un écarteur massif et relié par le biais d'un anneau intermédiaire plat à l'anneau ou au demi-anneau également plat d'un indicateur de préférence plan.
